# EUROPÄISCHE PATENTANMELDUNG

(11) **EP 1 380 771 A2**
(43) Veröffentlichungstag der Anmeldung: **14.01.2004**
(21) Anmeldenummer: 03012383.0
(22) Anmeldetag: 30.05.2003
(51) Int. Cl.: F16H 41/24

(54) **Hydrodynamischer Drehmomentwandler mit einem Leitrad und Herstellungsverfahren für ein solches**

(30) Priorität: 12.07.2002 DE 10231608
(71) Anmelder: DaimlerChrysler AG, 70567 Stuttgart (DE)
(72) Erfinder: Fahr, Rolf, 73760 Ostfildern (DE); Koppitz, Bernd, 73650 Winterbach (DE); Schultz, Heinz, 73269 Hochdorf (DE); Wörner, Otto, 72766 Reutlingen (DE)

(57) **Zusammenfassung**

Die Erfindung betrifft ein gegossenes Leitrad (5) eines hydrodynamischen Drehmomentwandlers. In dieses Leitrad (5) ist ein Freilauf eingesetzt, dessen Freilaufaußenring (13) gehärtete Einzelklemmbahnen (14) aufweist. Zum Schutz der Einzelklemmbahnen (14) beim Spritzguss ist ein spezieller Dichtring (17) vorgesehen.

## Beschreibung

Die Erfindung betrifft gemäß Oberbegriff von Patentanspruch 1 einen hydrodynamischen Drehmomentwandler mit einem Leitrad. Ferner betrifft die Erfindung gemäß Oberbegriff von Patentanspruch 12 ein Herstellungsverfahren für ein solches Leitrad.

Aus der DE 198 26 351 C2 ist bereits ein hydrodynamischer Drehmomentwandler mit einem Leitrad bekannt. Dieses Leitrad ist drehfest mit einem Freilaufaußenring eines Freilaufes verbunden.

Aufgabe der Erfindung ist es, ein hinsichtlich des übertragbaren Drehmomentes und der Freilauffunktion hochwertiges und dennoch kostengünstig zu fertigendes Leitrad zu schaffen.

Die erläuterte Aufgabe ist gemäß der Erfindung mit den Merkmalen von Vorrichtungsanspruch 1 bzw. Verfahrensanspruch 12 in vorteilhafter Weise gelöst.

Ein Vorteil der Erfindung ist der, dass die spanlose Integration eines fertigbearbeiteten Freilaufaußenringes in das Leitrad ermöglicht wird. Dabei wird das Leitrad als kostengünstiges Gussteil hergestellt. Insbesondere ein Druckguss des Leitrades aus Aluminium, Magnesium oder thermoplastischem bzw. duroplastischem Kunststoff wird ermöglicht. Das gegossene Leitrad bzw. dessen Schaufelring muss nicht zwangsläufig spanabhebend nachbearbeitet werden. Eine spanende Nachbearbeitung kann jedoch beispielsweise zum Auswuchten der Einheit Leitrad/Freilaufaußenring notwendig sein. Bei dem erfindungsgemäßen Gießen/Spritzen des Leitrades um den Freilaufaußenring kann ein solches Auswuchten jedoch in besonders vorteilhafter Weise minimiert werden. Dies liegt daran, dass die Negativform bzw. das Werkzeug zum Gießen/Spritzen der Einheit Leitrad/Freilaufaußenring nach einem ersten Probeguss nachbearbeitet werden kann. Dazu wird die Unwucht des Probegusses auf dem Wuchtstand ermittelt und die Position der Freilaufaußenringaufnahme in der Negativform entsprechend geringfügig exzentrisch angeordnet, so dass sich die beiden Unwuchten kompensieren. Die Unwucht des Leitrades rührt daher, dass die einzelnen sehr komplex geformten Schaufelformen in der Negativform fertigungsbedingt nicht vollkommen identisch sind.

Das Leitrad wird um einen Freilaufaußenring gegossen bzw. gespritzt, der mehrere gehärtete Einzelklemmbahnen aufweist. Freiläufe mit Freilaufaußenringen, die auf der Innenseite Einzelklemmbahnen aufweisen, sind hochwertiger als Freiläufe mit Freilaufaußenringen, deren Innenseite kreisrund ist. Diese Hochwertigkeit liegt darin begründet, dass bei gleichen Außenabmessungen ein höheres Drehmoment übertragen werden kann und die Funktionssicherheit bei Überlast besser ist. Die Härtung der Einzelklemmbahnen kann eine Oberflächenhärtung, wie beispielsweise eine Einsatzhärtung oder Nitrierung sein. Ferner kann der komplette Werkstoff des Freilaufaußenringes durchgehärtet sein.

In besonders vorteilhafter Weise kann der Lagerinnenring die gegenüber diesem drehbare Leitradnabe sowohl radial- als auch axial lagern, wobei bei entsprechender Materialwahl eine Gleitlagerung besonders bauraumsparend und kostengünstig verwirklichbar ist.

Sowohl der eingegossene Freilaufaußenring, als auch der Lagerinnenring können in besonders vorteilhafter Weise aus Sintermetall gefertigt sein.

Patentanspruch 7 betrifft eine besonders vorteilhafte Ausgestaltung der Erfindung, bei welcher die hohe Drehmomentübertragung an der Fügestelle zwischen Leitrad und Freilaufaußenring des Freilaufes durch die Außenkonturgestaltung des Freilaufaußenringes bewerkstelligt wird. So kann beispielsweise eine Verzahnung in die Außenkontur des Freilaufaußenring geschmiedet sein, welche bei dem Gießen des Leitrades umgossen bzw. im Falle des Druckgusses umspritzt wird. Anstelle einer Verzahnung können beliebige Formen, wie beispielsweise grobstollige Höcker vorgesehen sein. Ein Schmieden dieser beliebigen Formen ist besonders kostengünstig, wobei infolge der Verbindung durch Umgießen mit Gusswerkstoff eine Nachbearbeitung der Höcker, Verzahnungen etc. entfällt.

Patentanspruch 3 zeigt eine besonders vorteilhafte Ausgestaltung der Erfindung, bei welcher ein Dichtring verhindert, dass flüssiger Werkstoff beim Druck-/gießen in den Freilaufraum gelangt und dort mit den Einzelklemmbahnen des Freilaufaußenringes in Kontakt kommt und an diesen "festbackt". Die Vorrichtungsansprüche 4 und 8 bis 10 und die Verfahrensansprüche 13 bis 18 zeigen dabei besonders vorteilhafte Ausgestaltungen, welche in besonders hohem Maße verhindern, dass flüssiger Werkstoff beim Gießen mit den Einzelklemmbahnen des Freilaufaußenringes in Kontakt kommt und dort "festbackt". Der Dichtring kann sogar vom Gusswerkstoff umspritzt/umgossen werden, ohne dass dieser Gusswerkstoff am Freilaufaußenring "festbackt". Dazu kann die Negativform bzw. das Gusswerkzeug entsprechende Dichtkanten aufweisen.

Die Herstellung einer sehr unsymmetrischen Einheit aus Freilaufaußenring und Dichtring bzw. Dichtscheibe verhindert in montagefreundlicher Weise, dass diese Einheit falschherum in das Gusswerkzeug zum Verbundguss zwischen Leitrad und besagter Einheit eingesetzt werden kann.

Patentanspruch 11 zeigt eine besonders kostengünstige und leichte Form des Leitrades als Bauteil aus faserverstärktem Kunststoff. Dabei tritt in vorteilhafter Weise kein Verschleiß am abrasionsempfindlichen faserverstärktem Kunststoff auf, da die Radial- und Axiallagerung vom Dichtring bzw. der Dichtscheibe übernommen wird.

Weitere Vorteile der Erfindung gehen aus den weiteren Patentansprüchen, der Beschreibung und der Zeichnung vor.

Die Erfindung ist nachfolgend anhand einer Zeichnung erläutert.

Es zeigen
Fig. 1 einen montierten hydrodynamischen Drehmomentwandler, der u.a. ein Leitrad mit Freilauf umfasst,
Fig. 2 einen Freilaufaußenring des Freilaufes aus Fig. 1, wobei dieser Einzelklemmbahnen aufweist,
Fig. 3 den Freilaufaußenring des Freilaufes aus Fig. 2 in einer geschnittenen Darstellung, die das Profil zeigt, wobei ersichtlich ist, dass der Freilaufaußenring auf die Mitte zulaufend radial außen beidseitig konisch angeschrägt ist,
Fig. 4 einen ersten Verfahrensschritt eines Herstellungsverfahrens zum Fügen einer abgedichteten Einheit aus Freilaufaußenring und einem Dichtring,
Fig. 5 ein Detail im Bereich der Einheit aus Freilaufaußenring und Dichtring aus Fig. 4,
Fig. 6 einen zweiten Verfahrensschritt des Herstellungsverfahrens in welchem ein Verbundguss aus der Einheit gemäß Fig. 4 bzw. Fig. 5 und dem Leitrad hergestellt wird,
Fig. 7 ein Detail im Bereich der Einheit aus Fig. 6,
Fig. 8 den zweiten Verfahrensschritt gemäß Fig. 6, wobei zusätzlich ein federbelasteter Druckstift dargestellt ist, welcher für ein dichtendes Anliegen von der Einheit aus Freilaufaußenring und Dichtring an der Gussformhälfte sorgt,
Fig. 9 das verbundgegossene Leitrad mit der Einheit aus Freilaufaußenring und Dichtring,
Fig. 10 eine Draufsicht auf die Leitradnabe des Leitrades gemäß Fig. 9,
Fig. 11a und Fig. 11b zwei Alternativen zum ersten Verfahrensschritt eines Herstellungsverfahrens zum Fügen einer abgedichteten Einheit aus Freilaufaußenring und einer Dichtscheibe, wobei diese beiden Alternativen entsprechend dem Detail aus Fig. 5 dargestellt sind,
Fig. 12 ein Profil eines alternativen Freilaufaußenringes, welcher im Gegensatz zu dem aus Fig. 2 bzw. Fig. 3 ausschließlich einseitig konisch angeschrägt ist,
Fig. 13 ein Profil eines alternativen Freilaufaußenringes, welcher sich im wesentlichen durch die anders gestaltete Aufnahme für die Dichtscheibe von dem Ausgestaltungsbeispiel gemäß Fig. 2 bzw. Fig. 3 unterscheidet,
Fig. 14 bis Fig. 16 schematisch unterschiedliche Ausgestaltungsformen der Verbindung zwischen Freilaufaußenring und Leitrad in dem Bereich, in welchem die Anlaufscheibe eingesetzt wird,
Fig. 17 detailliert ein zweiteilige Gussformhälfte welche beim Gießen des Leitrades - d.h. dem Verfahrensschritt gemäß Fig. 6 - Anwendung findet,
Fig. 18 einen Teilbereich eines alternativen Freilaufaußenringes und einer Dichtscheibe,
Fig. 19 die Innenseite von zwei alternativen Dichtscheiben und
Fig. 20 ein Profil eines alternativen Freilaufaußenringes, welcher sich vom Freilaufaußenring gemäß Fig. 13 im wesentlichen durch die anders gestaltete Aufnahme für die Dichtscheibe unterscheidet.

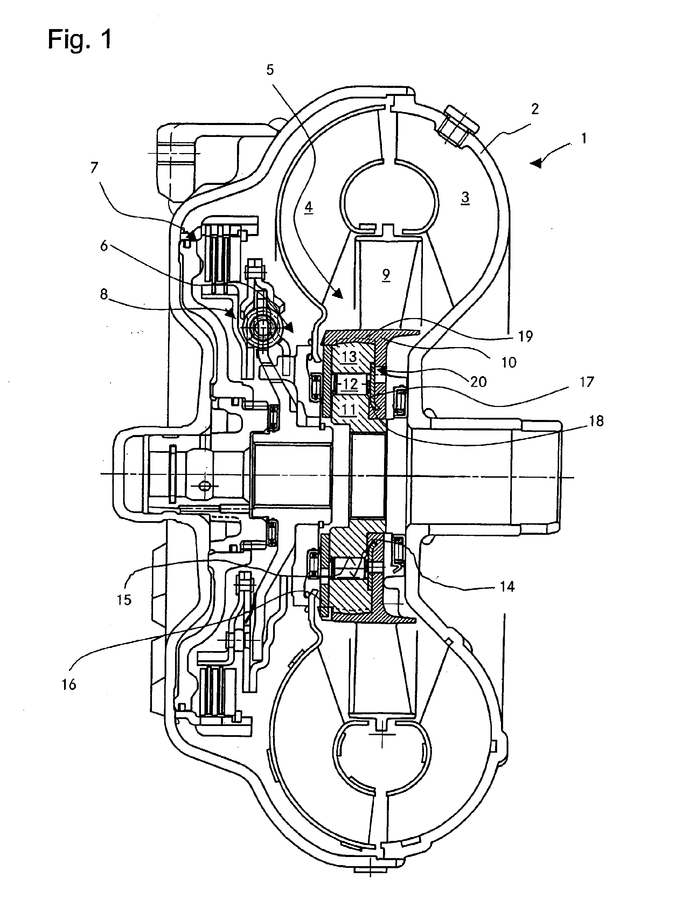

Fig. 1 zeigt einen hydrodynamischen Drehmomentwandler 1, der
- ein bewegungsfest mit einem Wandlergehäuse 2 verbundenes Pumpenrad 3,
- ein drehbar gegenüber dem Pumpenrad 3 angeordnetes Turbinenrad 4,
- ein Leitrad 5 mit einem Freilauf 6,
- eine Wandlerüberbrückungskupplung 7 und
- einen Torsionsdämpfer 8
umfasst.

Das Leitrad 5 besteht aus einem Schaufelring 9 und einer mit diesem einteilig gegossenen Leitradnabe 10, die im wesentlichen ein T-förmiges Profil hat. Das Leitrad 5 ist mittels des Freilaufs 6 in die eine Drehrichtung gegenüber einem nicht näher dargestellten Getriebegehäuse abgestützt. Dazu ist ein Lagerinnenring 11 des Freilaufs 6 über eine ebenfalls nicht näher dargestellten hohle Statorwelle drehfest mit dem Getriebegehäuse verbunden. Die Verbindung zwischen dem Lagerinnenring 11 und der Statorwelle wird mittels einer Welle-Nabe-Verzahnung hergestellt. Neben diesem Lagerinnenring 11 umfasst der Freilauf 6 ferner
- einzeln angefederte Zylinderrollen 12 in einem Lagerkäfig und
- einen außenverzahnten Freilaufaußenring 13.
Sowohl der Freilaufaußenring 13 als auch der Lagerinnenring 11 bestehen aus Stahl, wobei sich die Zylinderrollen 12 an einer gehärteten Klemmbahn 14 des Freilaufaußenringes 13 und einer gehärteten Klemmbahn 15 des Lagerinnenringes 11 abwälzen bzw. bei Drehrichtungsumkehr zwischen diesen verklemmen. Ab einer bestimmten Drehzahl liegen die Zylinderrollen 12 infolge der Fliehkraft radial außen an.

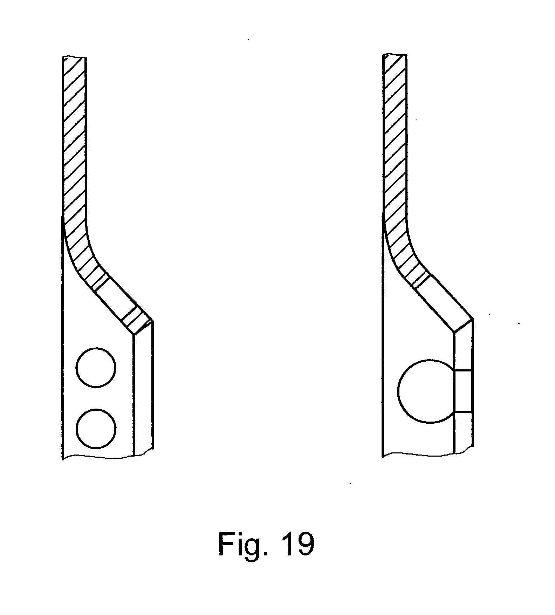

An der einem nicht näher dargestellten Antriebsmotor zugewandten Stirnseite des Freilaufaußenringes 13 liegt eine zu Schmier-/Kühlzwecken gelochte Anlaufscheibe 16 an, welche mit der Leitradnabe 10 verdrehfest verstemmt ist. Der Freilaufaußenring 13 weist an der dieser Stirnseite gegenüberliegenden Stirnseite eine radial innenliegende Vertiefung 20 auf, in welche ein als Dichtscheibe 17 ausgeführter Dichtring eingesetzt ist. Diese Dichtscheibe 17 ist im Bereich von deren Innenkante 18 vom Gusswerkstoff der Leitradnabe 10 umgeben. Dabei ist diese Innenkante 18 in die vom Lagerinnenring 11 weg weisende Richtung gebogen. In einem weiter unten beschriebenen Herstellungsverfahren ist die Leitradnabe 10 sowohl um diese Innenkante 18, als auch um eine Außenverzahnung 19 des Freilaufaußenringes 13 gegossen. Der gebogene Teilbereich kann - wie in den beiden Alternativen Fig. 19 gezeigt - zur besseren Verankerung in dem Gusswerkstoff unterbrochen ausgestaltet sein.

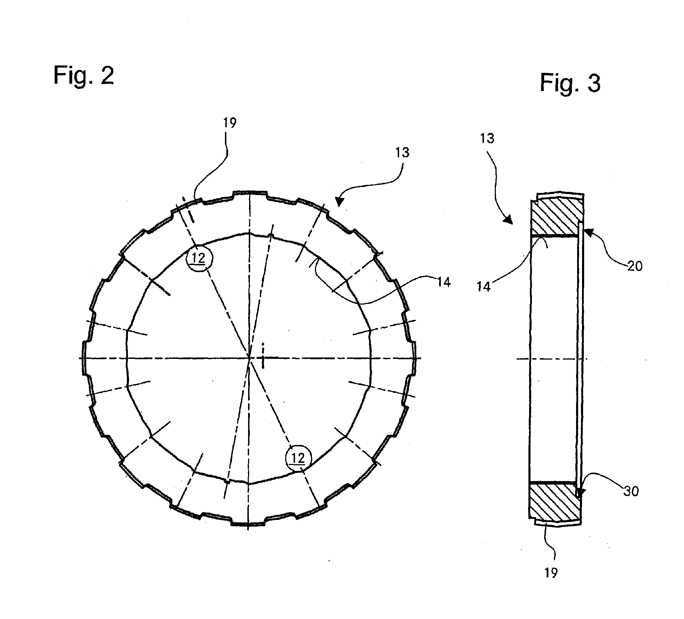

Fig. 2 und Fig. 3 zeigen den Freilaufaußenring 13 als Einzelteil. Dabei sind beispielhaft zwei der Zylinderrollen 12 in Überrollposition - d.h. beim fliehkraftbedingten Anliegen am Freilaufaußenring 13 - eingezeichnet. Die Vertiefung 20 des Freilaufaußenringes 13 ist an deren Außenkante 30 scharfkantig rechtwinklig zur Innenkante 70.

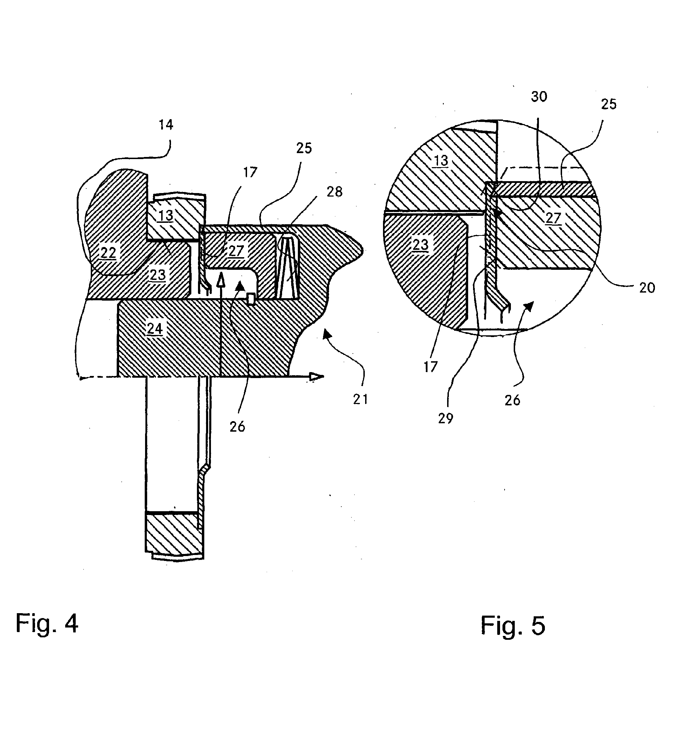

Fig. 4 und deren Detail Fig. 5 zeigen, wie in einem ersten Herstellungsverfahrenschritt die Dichtscheibe 17 in die Vertiefung 20 des Freilaufaußenringes 13 eingepresst wird. In die Vertiefung 20 ist die Dichtscheibe 17 vor diesem Einpressen lose eingesetzt. Beim Einpressen wird die Dichtscheibe 17 im Freilaufaußenring 13 zwischen einem axialverschieblichen Stempel 21 und einem als Widerlager 22 für diesen Stempel 21 ausgeführtem Lagerringträger radial verspannt.

Das Widerlager 22 weist einen zur Klemmbahn 14 des Freilaufaußenringes 13 korrespondierenden Zapfen 23 auf, auf den der Freilaufaußenring 13 gesteckt ist, so dass dieser sich mit dessen Stirnseite axial gegen das Widerlager 22 abstützten kann.

Der Zapfen 23 des Widerlagers 22 weist eine zentrische Bohrung auf. Der mehrteilige Stempel 21 weist einen Zapfen 24 auf, der in dieser Bohrung des Widerlagers 22 konzentrisch und axialverschieblich geführt ist. Der Zapfen 24 ist einteilig mit einer außenliegenden Ringschneide 25, wobei zwischen der Ringschneide 25 und dem Zapfen 24 eine Ringkammer 26 angeordnet ist, welche topfartig in die auf das Widerlager 22 weisende Richtung geöffnet ist. Diese Ringkammer 26 nimmt einen ringförmigen Druckkolben 27 axialverschieblich auf, wobei dieser sich in die vom Widerlager 22 weg weisende Richtung mittels eines Tellerfederpaketes elastisch am Boden 28 der Ringkammer 26 abstützt. Bei unbetätigtem Werkzeug, d.h. bei unbetätigtem Stempel 21 ist die Vorderkante der Ringschneide 25 geringfügig hinter einer Stirnfläche 29 des Druckkolbens 27. Somit ist die Dichtscheibe 17 beim folgend erläuterten Einpressen in die Vertiefung 20 des Freilaufaußenringes infolge eines Vordruckes sicher verspannt. Bei dem in der Zeichnung Fig. 4 und Fig. 5 dargestellten ausgerücktem Stempel 21 schneidet die Ringschneide 25 in einen radial außen liegenden Bereich des Dichtringes 17 ein und drückt dessen Material radial nach außen, so dass der Dichtring 17 infolge radialer Pressung dichtend am Innendurchmesser der scharfkantigen Außenkante 30 anliegt.

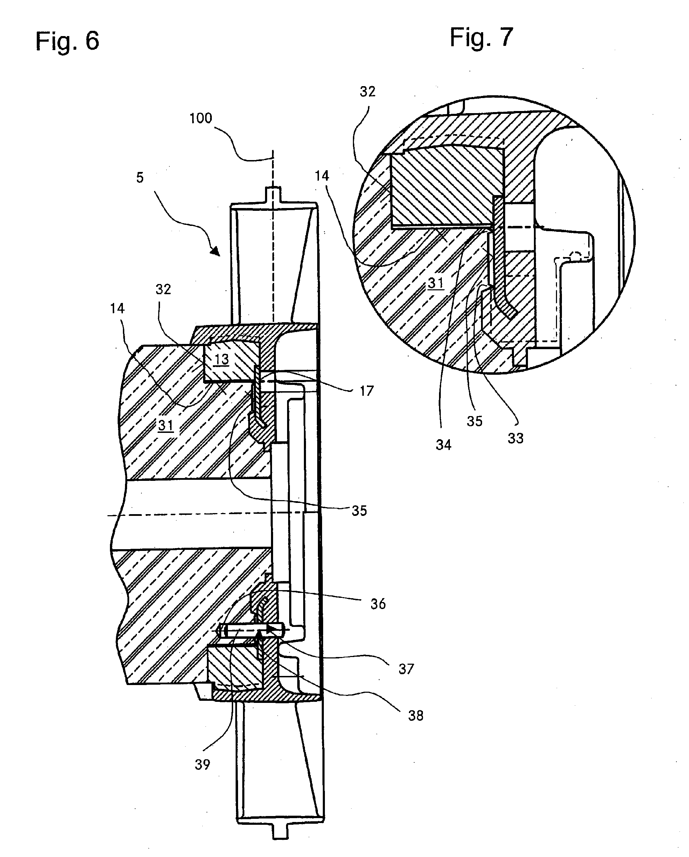

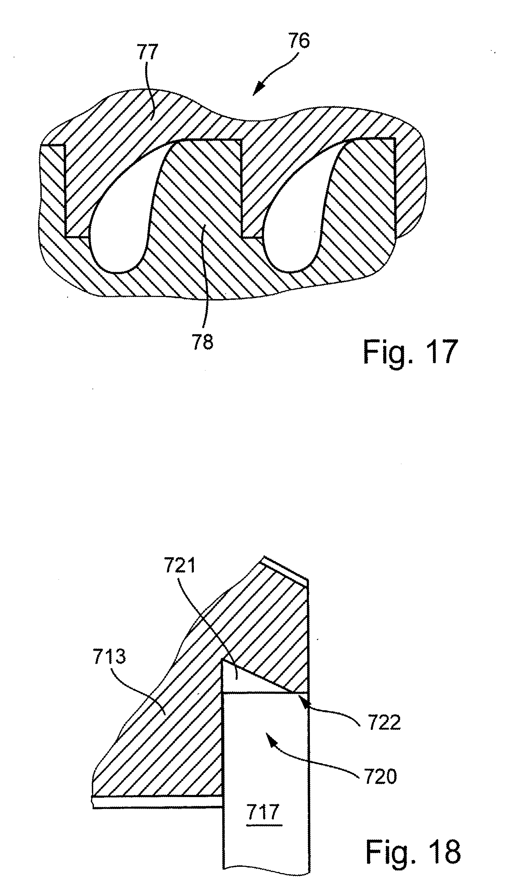

Fig. 6 und deren Detail Fig. 7 zeigen, wie in einem zweiten Herstellungsverfahrenschritt das Leitrad 5 um die verpresste Einheit aus Freilaufaußenring 13 und Dichtscheibe 17 spritzgegossen wurde. Von der dazu notwendigen Gussform ist nur eine diese Einheit "Freilaufaußenring 13/Dichtscheibe 17" betreffende erste Gussformhälfte 31 dargestellt. Die andere in Fig. 17 ansatzweise dargestellte Gussformhälfte 76 ist zweiteilig, wobei deren Formteilung entlang eines verzahnten Profiles verläuft. Dieses Profil ist in Fig. 6 vereinfacht durch die Linie 100 und in Fig. 17 detailliert dargestellt. Vor dem Spritzvorgang des Leitrades 5 wird die besagte Einheit "Freilaufaußenring 13/Dichtscheibe 17" auf die erste Gussformhälfte 31 gesetzt.

Zur Herstellung einer Kühl- und Schmiermittelausnehmung für den späteren Betrieb des Freilaufes 6 ist ein im Teilbereich konischer Formteileinsatzbolzen 39 mittels einer Presspassung mit einer Bohrung 36 der ersten Gussformhälfte 31 verpresst. Auf diesen Formteileinsatzbolzen 39 ist die besagte Einheit "Freilaufaußenring 13/Dichtscheibe 17" gesteckt, wobei ein Stanzloch 38 in der Dichtscheibe 17 vom Formteileinsatzbolzen 39 mit Dichtsitz durchsetzt ist. Die leichte Konizität im Teilbereich des Formteileinsatzbolzens 39 und die geringe Toleranz des Stanzloches 38 erlaubt zum einen den zuvorgenannten Dichtsitz, der verhindert das beim Spritzguss flüssiger Leitradwerkstoff zwischen Formteileinsatzbolzen 39 und Dichtscheibe 17 durchfließt. Zum anderen ermöglicht die Konizität ein Auslösen des fertiggegossenen Leitrades 5 aus der Gussformhälfte 31. Das Leitrad 5 hat nach dem Spritzgussvorgang als Negativform des Formteileinsatzbolzens 39 eine Ausnehmung 37, welche mit dem Stanzloch 38 fluchtet und besagte Kühl- und Schmiermittelausnehmung für den Betrieb des Freilaufes 6 bildet.

In der ersten Gussformhälfte 31 verläuft noch ein nicht näher dargestellter Kühlmittelkanal.

Die Gussformhälfte 31 bedeckt die von Gusswerkstoff frei zu haltende Stirnfläche 32 und Klemmbahn 14 des Freilaufaußenringes'13. Die Gussformhälfte 31 weist zwei hervorstehende ringförmige Dichtkanten 33 u. 34 auf, die sich geringfügig in die Dichtscheibe 17 drücken. Infolge der Dichtwirkung an diesen Dichtkanten 33 u. 34 und an der Stirnfläche 32 wird
- eine zwischen diesen Dichtkanten 33 u. 34 innenliegende Fläche 35 des Dichtringes 17 und
- die Klemmbahn 14 des Freilaufaußenringes 13
frei von Gusswerkstoff halten.

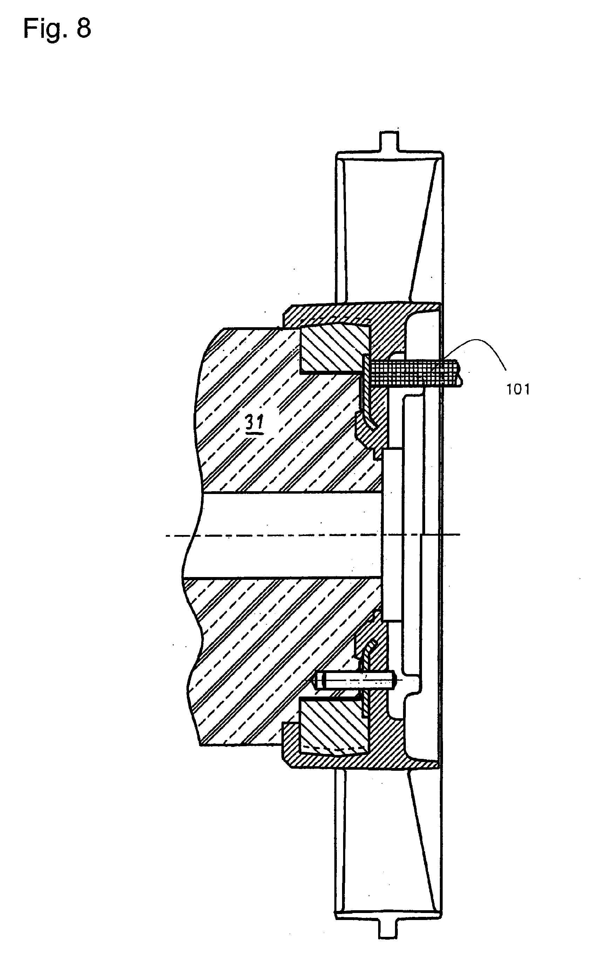

Um die Dichtwirkung an der Stirnfläche 32 und den Dichtkanten 33 u. 34 sicherzustellen, ist die Einheit "Freilaufaußenring 13/Dichtscheibe 17" mittels mehrerer federkraftbelasteter Druckbolzen 101 - von denen nur einer in Fig. 8 ersichtlich ist - gegen die erste Gussformhälfte 31 verspannt.

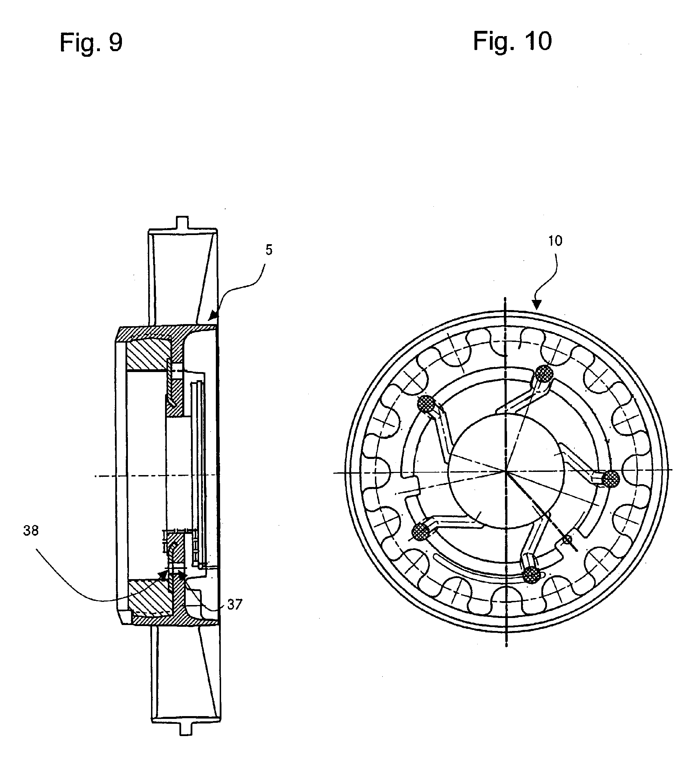

Fig. 9 zeigt das fertig spritzgegossene Leitrad 5, nachdem es aus dessen Gussform ausgestoßen ist. Die Dichtscheibe 17 und die Leitradnabe 10 weisen die beiden miteinander fluchtenden runden Ausnehmungen 37, 38 auf, wobei der Formteileinsatzbolzen 39 in der Gussformhälfte 31 verblieben ist. Somit ist eine Kühl-/Schmiermittelzufuhrbohrung für die in Fig. 1 ersichtlichen Zylinderrollen 12 geschaffen.

Fig. 10 zeigt eine Draufsicht auf die Leitradnabe 10 des Leitrades 5 gemäß Fig. 9.

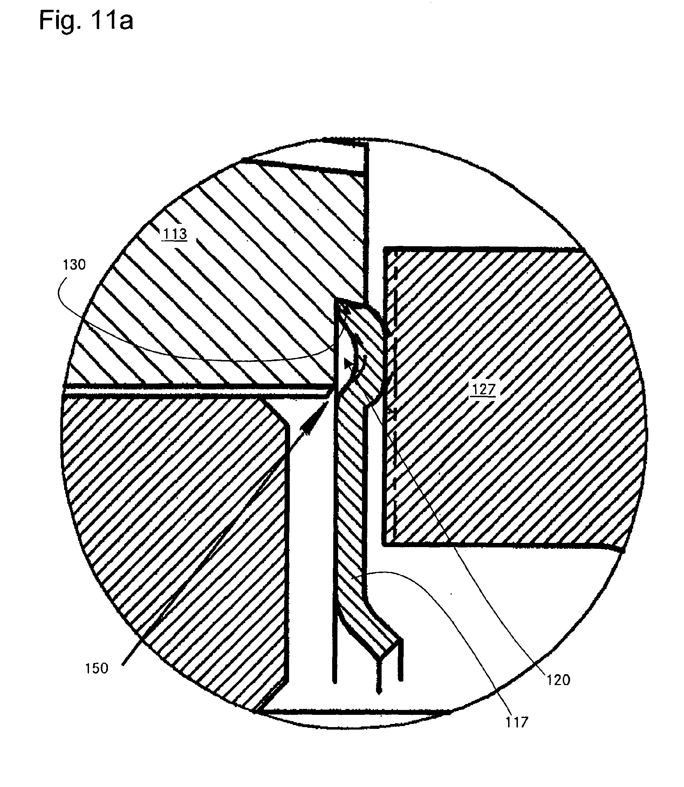

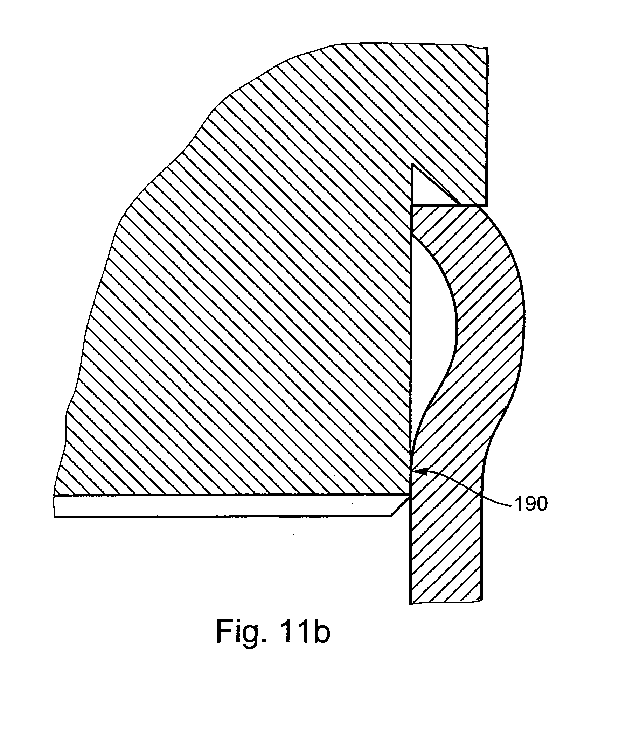

Fig. 11a und Fig. 11b zeigen weitere Alternativen zum ersten Verfahrensschritt eines Herstellungsverfahrens zum Fügen einer abgedichteten Einheit aus Freilaufaußenring 113 und einer Dichtscheibe 117. Dabei sind die Vertiefungen 120 des Freilaufaußenringes 113 anders ausgestaltet, als im Ausgestaltungsbeispiel gemäß Fig. 1 bis Fig. 9. So ist die scharfkantige Außenkante 130 nicht parallel, sondern winkelig zur Zentralachse des Freilaufaußenringes 113 ausgestaltet, so dass sich in der Vertiefung ein spitzer Winkel bildet. Die Dichtscheibe 117 weist in deren Randbereich eine umlaufende Sicke 150 auf, so dass die Dichtscheibe 117 unter Druckbeaufschlagung mittels des ringförmigen Druckkolbens 127 in den Freilaufaußenringes 113 in den Bereich des spitzen Winkels dichtend eingepresst werden kann.

Die Dichtscheibe aus Fig. 11b liegt im Gegensatz zur Dichtscheibe 117 aus Fig. 11a mit einer radial innerhalb der Sicke angeordneten Ringfläche 190 am Freilaufaußenring an, so das beim Einpressen der Dichtscheibe in den Freilaufaußenring ein Widerlager für den Druckkolben geschaffen ist.

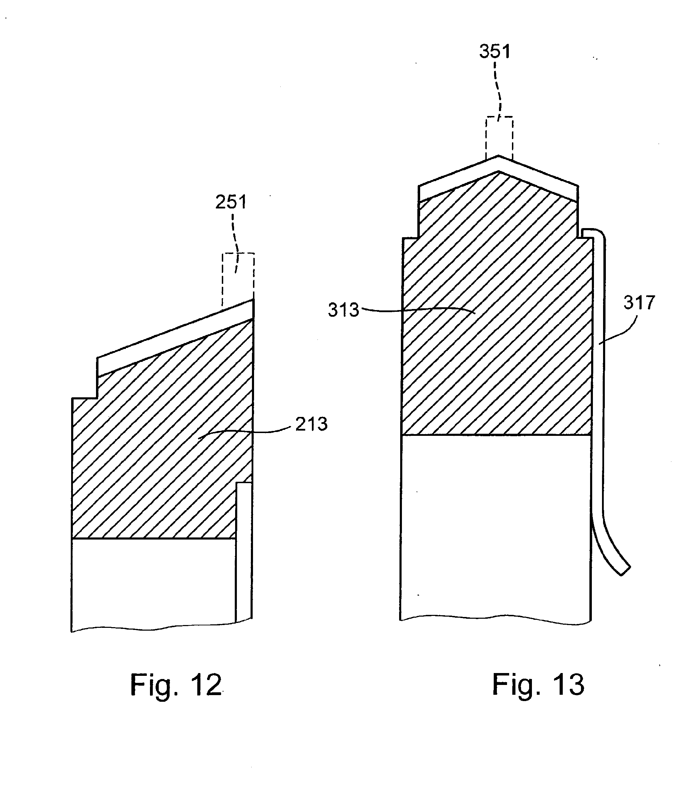

Fig. 12 zeigt ein Profil eines alternativen Freilaufaußenringes 213, welcher im Gegensatz zu dem aus Fig. 2 ausschließlich einseitig konisch angeschrägt ist. Nach dem Schmieden dieses Freilaufaußenringes 213 bleibt auf dessen einer Seite ein in der Zeichnung gestrichelt dargestellter Grad 251 über, welcher anschließend abgegrated wird. Nach den folgenden Dreharbeitsgängen wird der Freilaufaußenring 213 noch mit einer Räumnadel bearbeitet und abschließend gehärtet.

Fig. 13 zeigt ein Profil eines alternativen Freilaufaußenringes 313, welcher sich im wesentlichen durch die anders gestaltete Aufnahme für die Dichtscheibe 317 von dem Ausgestaltungsbeispiel gemäß Fig. 2 unterscheidet. Der Freilaufaußenring 351 ist auf dessen Außenseite beidseitig auf die Mitte zulaufend konisch angeschrägt. D.h. der Freilaufaußenring 351 ist mit einem Gesenkanzug versehen. Nach dem Schmieden dieses Freilaufaußenringes 313 bleibt in dessen Mitte ein in der Zeichnung gestrichelt dargestellter Grad 351 über, welcher anschließend abgegrated wird. Nach den folgenden Dreharbeitsgängen wird der Freilaufaußenring 313 noch mit einer Räumnadel bearbeitet. Die symmetrische Ausgestaltung des Freilaufaußenring 313 verhindert in vorteilhafter Weise ein verkehrtes Einlegen des Werkstückes beim Drehen.

Die Dichtscheibe 317 ist an deren radial äußerem Randbereich um einen Absatz des Freilaufaußenringes gebogen. In alternativen Ausgestaltungen kann anstelle dieser Biegung auch eine Clipsverbindung oder eine Bördelung vorgesehen sein.

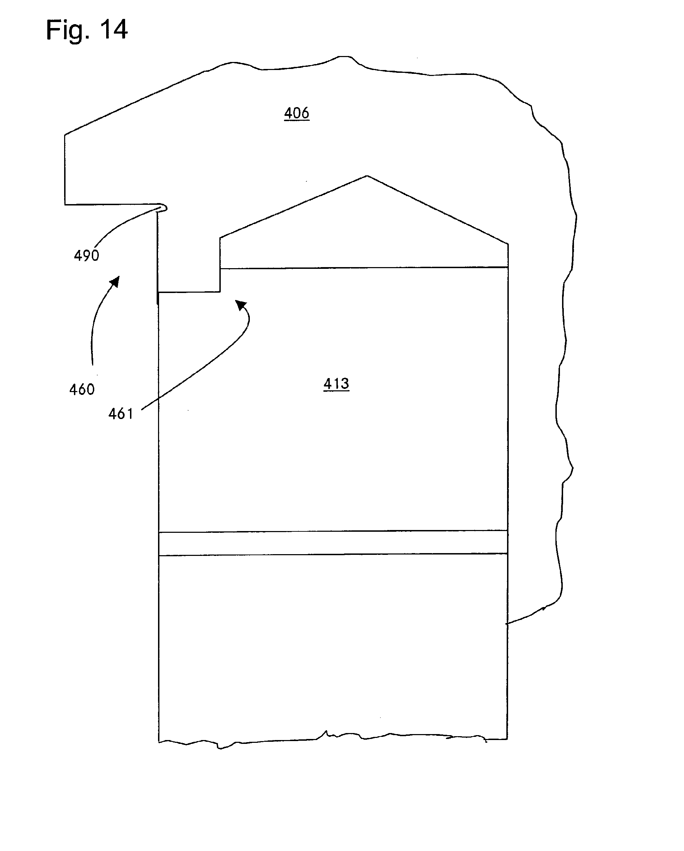

Fig. 14 bis Fig. 16 zeigen unterschiedliche Ausgestaltungsformen der Verbindung zwischen Freilaufaußenring und Leitrad in dem Bereich, in welchem die Anlaufscheibe eingesetzt wird. Diese Ausgestaltungsformen weisen eine Freilegung 490 bzw. 590 bzw. 690 auf, um gießtechnische Probleme zu umgehen.

Ziel der Ausgestaltungen gemäß Fig. 14 bis Fig. 16 ist es, die Bereiche 460 bzw. 560 bzw. 660, in denen die in Fig. 1 ersichtliche Anlaufscheibe eingesetzt wird, gießtechnisch so herzustellen, dass eine anschließende mechanische Bearbeitung möglich aber nicht unbedingt notwendig ist.

Zu Fig. 14: Durch den abgesetzten Außendurchmesser 461 des Freilaufaußenringes 413 wird erreicht, dass bei mechanischer Bearbeitung des Bereiches 660 der Drehmeißel nur das Leichtmetall des Leitrades 406 spanend abheben muss.

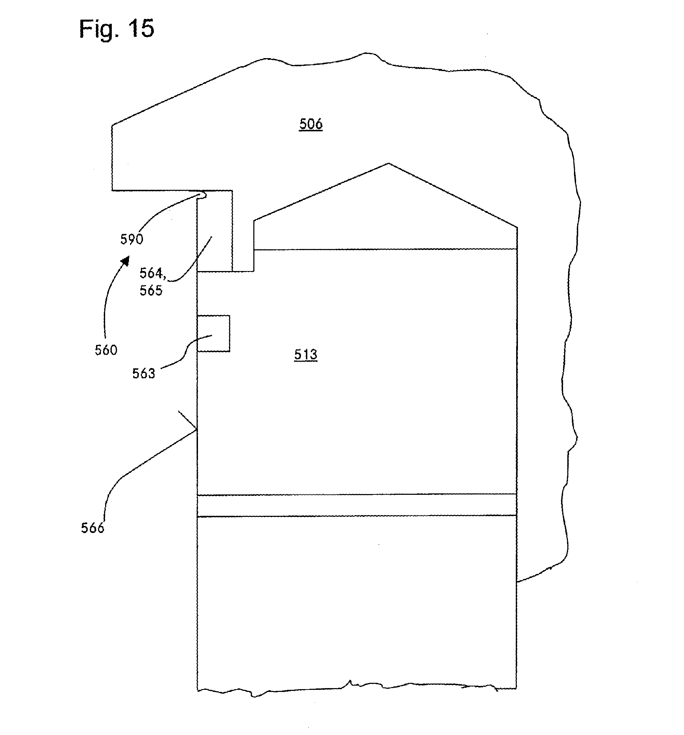

Zu Fig. 15: Mittels einer Ringnut 563 im Freilaufaußenring 513 und einer umfangsmäßig von Segmenten 564 unterbrochenen Ringnut 565 im Leitrad 506 wird quasi ein Labyrinth erzeugt, welches beim Druckguss ein Eindringen von flüssigem Werkstoff an die Stirnfläche 566 des Freilaufaußenringes 513, an welcher die in Fig. 1 ersichtliche Anlaufscheibe anliegt, verhindert. Beim plastischen Verformen des Leitrades 506 zum Zwecke des Verstemmens mit der Anlaufscheibe, wird die Anlaufscheibe axial gegen den Freilaufaußenring 513 gepresst. Um ein Verbiegen der Anlaufscheibe zu verhindern, sind die besagten Segmente 564 als Axialabstützung vorgesehen.

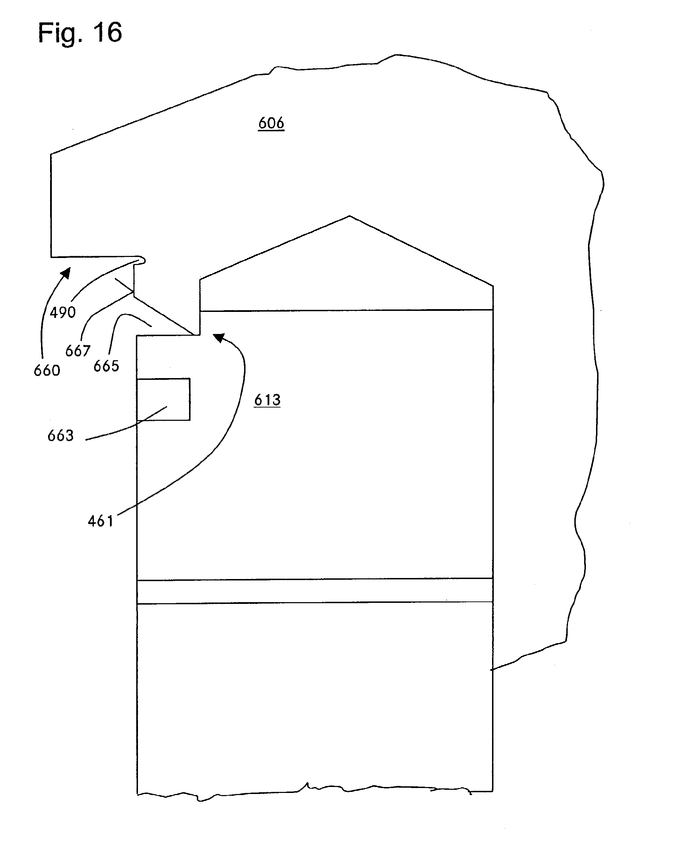

Fig. 16 sieht neben der Ringnut 663 im Freilaufaußenring 613 eine keilförmige Ringnut 665 mit spitzem Nutgrund vor, die sich zwischen Freilaufaußenring 613 und Leitrad 606 bildet. Der Außendurchmesser der keilförmige Ringnut 665 ist kleiner als der Außendurchmesser der Anlaufscheibe, so dass diese Anlaufscheibe sich beim Verstemmen von dem Leitrad 606 mit der Anlaufscheibe an dem so vorhandenen Absatz 667 des Leitrades 606 abstützt.

Falls bei den Ausführungen gemäß Fig. 15 und Fig. 16 fertigungsbedingt dennoch geringe Mengen flüssigen Werkstoffs an Stirnfläche des Freilaufaußenringes gelangen, so kann dieser Werkstoff in einer anschließenden Sandstrahlbearbeitung entfernt werden. Dieser Sandstrahlbearbeitungsschritt kann auch zur Feinbearbeitung der Schaufeln bzw. des kompletten Leitrades nach dem Entgraten des Druckgussrohlings genutzt werden.

Fig. 17 zeigt detailliert die andere zweiteilige Gussformhälfte 76 welche in der Beschreibung zu Fig. 6 kurz aufgeführt wurde. Das sich zwischen dem linken Teil 77 und dem rechtenen Teil 78 der zweiteilige Gussformhälfte 76 bildende verzahnte Profil schließt die Negativform für die Schaufeln des Schaufelringes 9 ein.

Fig. 18 zeigt einen Teilbereich eines Freilaufaußenringes 713 und einer Dichtscheibe 717. Gegenüber dem Freilaufaußenring aus Fig. 3 ist eine Vertiefung 720 fertigungstechnisch besonders vorteilhaft ausgeführt. Die Vertiefung 720 weist am Vertiefungsgrund einen spitzen Winkel auf, innerhalb dessen der ringförmige Hohlraum 721 liegt. Am Vertiefungsrand ist eine Zentrierung 722 für die Dichtscheibe 717 vorgesehen.

Fig. 19 zeigt die Innenseite von zwei alternativen Dichtscheiben. Diese beiden Dichtscheiben sind an deren radial innerem gebogenen Teilbereich umfangsmäßig mit Stanzlöchern versehen. Diese sechs bis acht gleichmäßig am Umfang verteilten Stanzlöcher verankern die Dichtscheibe besser im Gusswerkstoff des Leitrades. Die beiden alternativen Dichtscheiben unterscheiden sich dadurch, dass die Stanzlöcher bei der einen Alternative vollständig vom Material der Dichtscheibe umgeben sind. In der anderen Alternative überschreiten die Stanzlöcher die Innenkante der Dichtscheibe, so dass die Stanzlöcher eine geöffnete Außenkante aufweisen. Es sind in weiteren Alternativen beliebige andere Formen und eine beliebige Anzahl von Stanzlöchern denkbar.

Der in den Ausführungsbeispielen als Dichtscheibe ausgeführte Dichtring kann sich in anderen konstruktiven Ausgestaltungen auch in anderer Weise erstrecken. Es sind verschiedene Formen der Dichtscheibe/des Dichtringes und der Fügestellen denkbar. Es sind beispielsweise verschiedene Ausgestaltungen der Dichtscheibe/des Dichtringes mit Sicken vorstellbar, wobei diese Sicken die Funktion der Dichtkanten aus Fig. 7 übernehmen. D.h. das gebogene Blech der Sicken liegt an der Gussformhälfte unter Druck an, so dass kein flüssiger Gusswerkstoff an dieser Kontakfläche vorbeifließen kann.

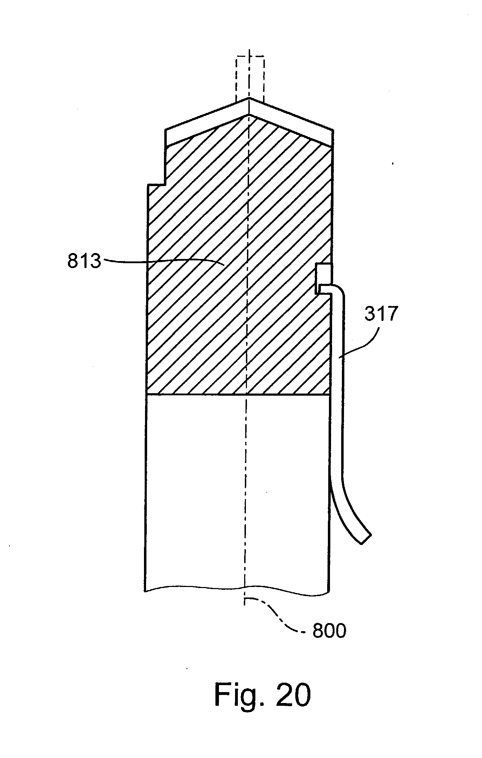

Fig. 20 zeigt ein Profil eines alternativen Freilaufaußenringes 813, welcher sich vom Freilaufaußenring gemäß Fig. 13 im wesentlichen durch die anders gestaltete Aufnahme für die Dichtscheibe 317 unterscheidet. So ist eine Ringnut 320, in welche die Dichtscheibe 317 eingeformt wird auf einem kleineren Durchmesser, als bei dem Freilaufaußenring gemäß Fig. 13. Dadurch ist der Freilaufaußenring 813 bezüglich einer mittigen Ebene 800 unsymmetrisch bzw. an dessen Stirnflächen beidseitig unterschiedlich ausgestaltet. Dies verhindert, dass der prinzipbedingt in die beiden Drehrichtungen unterschiedlich wirksame Freilaufaußenring mit der falschen Seite in die Gussformhälfte gemäß Fig. 6 und Fig. 7 eingelegt werden kann.

Zur dichtenden Verbindung zwischen Freilaufaußenring und Dichtring kann der Dichtring alternativ auch an den Freilaufaußenring geklebt sein.

Sowohl der Freilaufaußenring als auch der Lagerinnenring des Freilaufes können in alternativen Ausgestaltungen aus gehärtetem Sintermetall bestehen. Auch kann nur einer der beiden Ringe aus gehärtetem Sintermetall bestehen.

Bei Verwendung eines nicht-gleitlagerfähigen Werkstoffes für die Leitradnabe bzw. den Schaufelring ist die Integration einer Gleitlagerstelle in dieses Bauteil möglich, indem der im Ausführungsbeispiel als Dichtscheibe ausgeführte Dichtring aus gleitlagerfähigem Werkstoff hergestellt wird. Dabei entsteht eine Axial- und Radiallagerung des Dichtringes gegenüber dem Lagerinnenring des Freilaufes. Wenn der Dichtring diese Axialund Radiallagerung übernimmt, kann das Leitrad in besonders kostengünstiger und leichtgewichtiger Weise aus faserverstärktem Kunststoff, hergestellt werden, da der nicht sehr abriebsfeste faserverstärkte Kunststoff dann keine Gleitlagerflächen aufweist. Der faserverstärkte Kunststoff kann beispielsweise ein
- Duroplast oder
- spezieller relativ temperaturfester Thermoplast
sein, der mit
- Glasfasern oder
- Kevlarfasern oder
- Naturfasern
verstärkt ist.

Die axial- und radiallagernde Dichtscheibe kann beispielsweise ähnlich einer Gleitlagerbundbuchse ausgestaltet sein, wobei der Bund axial am Lagerinnenring des Freilaufes anliegt, wohingegen die Buchse der Gleitlagerbundbuchse radial am Lagerinnenring des Freilaufes anliegt. Die Gleitlagerbundbuchse kann alternativ auch radial und/oder axial unmittelbar gegenüber der Getriebewelle gelagert sein. Da abhängig vom konkreten Werkstoff bei der Herstellung eines Kunststoffleitrades keine hohen Temperaturen auftreten müssen, kann diese Gleitlagerbundbuchse zur Verhinderung von Verspannungen aufgrund unterschiedlicher Wärmeausdehnungskoeffizienten sogar ebenfalls aus Kunststoff bestehen. Alternativ kann der Dichtring als massives Metallteil ausgeführt sein, dessen Gleitlagerflächen bearbeitete Flächen sind.

Falls anstelle der Dichtscheibe aus Blech etc. ein Dichtring aus Gusswerkstoff oder ein geschmiedeter Dichtring verwendet wird, muss anstelle des Stanzens eines Stanzloches zur Kühlund Schmiermittelversorgung des Freilaufes eine andere Bearbeitungsform gewählt werden. Zur Herstellung der Kühl- und Schmiermittelausnehmung kann die Einheit aus Dichtring und Leitrad auch nachträglich gebohrt sein. Da diese Bohrung nach der Herstellung der Kompletten Einheit umfangsmäßig an jeder beliebigen Stelle angeordnet sein kann, kann diese Bohrung auch in besonders vorteilhafter Weise zur Wuchtung des Leitrades genutzt werden.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Hydrodynamischer Drehmomentwandler (1) mit einem Leitrad (5), welches drehfest mit einem Freilaufaußenring (13) eines Freilaufes (6) verbunden ist,
**dadurch gekennzeichnet,**
**dass** das Leitrad (5) an den Freilaufaußenring (13) verbundgegossen ist, wobei dieser gehärtete Einzelklemmbahnen (14) aufweist.

2. Hydrodynamischer Drehmomentwandler nach Patentanspruch 1,
**dadurch gekennzeichnet,**
**dass** das Leitrad (5) an den Freilaufaußenring (13) unlösbar verbundgegossen ist.

3. Hydrodynamischer Drehmomentwandler nach Patentanspruch 1,
**dadurch gekennzeichnet,**
**dass** sich ein Dichtring (Dichtscheibe 17) von den Einzelklemmbahnen (14) erstreckt.

4. Hydrodynamischer Drehmomentwandler nach Patentanspruch 3,
**dadurch gekennzeichnet,**
**dass** sich der Dichtring (Dichtscheibe 17) von der Einzelklemmbahnen (14) radial nach Innen erstreckt.

5. Hydrodynamischer Drehmomentwandler nach Patentanspruch 4,
**dadurch gekennzeichnet,**
**dass** der Dichtring (Dichtscheibe 17) in einem radial inneren Bereich von Gusswerkstoff einer Leitradnabe (10) des Leitrades (5) umgeben ist.

6. Hydrodynamischer Drehmomentwandler nach Patentanspruch 5,
**dadurch gekennzeichnet,**
**dass** der Dichtring (Dichtscheibe 17) in die vom Lagerinnenring (11) weg weisende Richtung gebogen ist.

7. Hydrodynamischer Drehmomentwandler nach einem der vorhergehenden Patentansprüche,
**dadurch gekennzeichnet,**
**dass** der Freilaufaußenring (13) an dessen Außenkontur von der zylindrischen Form abweicht, wobei diese Außenkontur vom Werkstoff der Leitradnabe (10) spielfrei umgeben ist.

8. Hydrodynamischer Drehmomentwandler nach einem der vorhergehenden Patentansprüche,
**dadurch gekennzeichnet,**
**dass** der Dichtring (Dichtscheibe 17) dichtend mit dem Freilaufaußenring (13) verbunden ist.

9. Hydrodynamischer Drehmomentwandler nach Patentanspruch 8,
**dadurch gekennzeichnet,**
**dass** der Dichtring (Dichtscheibe 17) mit Presssitz dichtend am Freilaufaußenring (10) anliegt.

10. Hydrodynamischer Drehmomentwandler nach Patentanspruch 9,
**dadurch gekennzeichnet,**
**dass** zur dichtenden Aufnahme des Dichtringes (Dichtscheibe 17) am Freilaufaußenring (10) ein Absatz (Außenkante 30) vorgesehen ist.

11. Hydrodynamischer Drehmomentwandler nach Patentanspruch 3,
**dadurch gekennzeichnet,**
**dass** das Leitrad aus einem faserverstärktem Kunststoff besteht und der aus einem gleitlagerfähigem Werkstoff bestehende Dichtring sowohl axial als auch radial gegenüber dem Lagerinnenring des Freilaufes gelagert ist.

12. Herstellungsverfahren eines Leitrades (5) eines hydrodynamischen Drehmomentwandlers (1), welches mit einem Freilaufaußenring (13) eines Freilaufes (6) verbunden ist,
**dadurch gekennzeichnet,**
**dass** Einzelklemmbahnen (14) auf der Innenseite des Freilaufaußenring (13) gehärtet sind und darauf folgend das Leitrad (5) an den Freilaufaußenring (13) verbundgegossen wird.

13. Herstellungsverfahren eines Leitrades gemäß Patentanspruch 12,
**dadurch gekennzeichnet,**
**dass**
in einem ersten Verfahrensschritt der Dichtring (Dichtscheibe 17) und der Freilaufaußenring (13) dichtend zu einer Einheit verbunden werden und
in einem zweiten Verfahrensschritt die Einheit in eine von zumindest zwei Gussformhälften (31) eingesetzt wird, wobei ein Fluss von Gusswerkstoff auf die Einzelklemmbahnen (14) des Freilaufaußenringes (13) mittels dichtendem Anliegen des Dichtringes (Dichtscheibe 17) an der Gussformhälfte (31) verhindert wird.

14. Herstellungsverfahren nach Patentanspruch 13,
**dadurch gekennzeichnet,**
**dass** in dem ersten Verfahrensschritt der Dichtring (Dichtscheibe 17) zwischen einem Stempel (21) und einem Wiederlager (22) verspannt und dabei unter plastischer Verformung an den Freilaufaußenring (13) angeformt wird.

15. Herstellungsverfahren nach Patentanspruch 13 oder 14,
**dadurch gekennzeichnet**,
in dem zweiten Verfahrensschritt zum dichtenden Anliegen des Dichtringes (Dichtscheibe 17) an der Gussformhälfte (31) zumindest eine Dichtkante (33 bzw. 34) vorgesehen ist.

16. Herstellungsverfahren nach Patentanspruch 14,
**dadurch gekennzeichnet,**
**dass** in dem ersten Verfahrensschritt zwischen dem Stempel (21) und dem Wiederlager (22) auch der Freilaufaußenring (13) im Kraftfluss in Serie zu dem Dichtring (Dichtscheibe 17) verspannt ist und dabei unter plastischer Verformung in einen speziellen Bereich (Vertiefung 20) des Freilaufaußenringes (13) eingeformt wird.

17. Herstellungsverfahren nach Patentanspruch 13,
**dadurch gekennzeichnet,**
**dass** zumindest ein spezielles Anpressmittel (federbelasteter Druckbolzen 101) vorgesehen ist, welches den Dichtring (Dichtscheibe 17) an die Gussformhälfte (31) drückt.

18. Herstellungsverfahren nach einem der Patentansprüche 13 bis 17,
**dadurch gekennzeichnet,**
**dass** zumindest eine Negativform (Formteileinsatzbolzen 39) lösbar und dichtend mit dem Dichtring (Dichtscheibe 17) verbunden ist, wobei diese Negativform (Formteileinsatzbolzen 39) beim zweiten Verfahrensschritt von Gusswerkstoff umgeben wird.
